# EUROPEAN PATENT SPECIFICATION

(11) **EP 0 336 751 B1**
(45) Date of publication and mention of the grant of the patent: **25.08.1993**
(21) Application number: 89303399.3
(22) Date of filing: 06.04.1989
(51) Int. Cl.: F24H 1/18, F24D 17/00

(54) **Water heater**
Wassererhitzer
Chauffe-eau

(30) Priority: 08.04.1988 US 179450
(43) Date of publication of application: 11.10.1989
(73) Proprietor: SIDDONS RAMSET LIMITED, West Heidelberg Victoria 3081 (AU)
(72) Inventor: Deforest, Lockwood, Mosman New South Wales 2088 (AU); Roberts Ian D., Nunawading Victoria 3131 (AU); Dixon, Christopher W.S., Brighton Victoria 3186 (AU)
(74) Representative: Neill, Alastair William

(56) References cited:
- EP-A- 0 172 372
- EP-A- 0 229 037

## Description

This invention relates to improvements in water heaters, and more particularly solar boosted heat pump water heaters having an improved heat exchanger arrangement.

The use of solar energy to supplement water heating systems is becoming increasingly practical with developments in technology. In Australian Patent number 509901 there is described a solar boosted heat pump system which converts solar energy particularly efficiently and transfers that energy by the use of a refrigerant heat pump.

In developing a solar boosted heat pump system for the heating of domestic water, the inventors tested various heat exchange systems for transferring the heat from the refrigerant circulated by the heat pump to the water to be heated. One such arrangement included the immersion of a finned tube carrying the refrigerant in a tank containing the water to be heated. This arrangement was thought to provide the most efficient means of transferring heat from the refrigerant to the water to be heated even though the system was expensive to manufacture. However, testing of the system showed that it was impractical due to the fact that the spaces between the fins tended to fill with the sediments commonly found in some domestic water supplies. Although attempts were made to redesign the finned tube to avoid the collection of sediments, the problem could not be overcome.

A number of attempts to provide heat pump water heaters may be found in the patent literature. For example. United States Patents 2,716,866 Silva and 4,452,050 Pierce, and United Kingdom Patent 1,466,980 Cromarty, each show water heaters having a refrigerant carrying tube surrounding a heat exchanger tank containing water to be heated. In each of the above examples, the heat exchange system is both complex and expensive due to the use of a number of separate windings (or winding sections, in the case of Cromarty) aimed at extracting the higher temperature superheat from the refrigerant fluid carried by the tubes. The use of separate windings or winding sections increases the material and manufacturing costs of the heat exchanger, and the inventors believe that these costs are not justified by the benefit which may be achieved by extracting the superheat from the refrigerant fluid. Furthermore, none of the systems described in the above literature envisages use of the system in association with a solar evaporator.

European Patent application 172,372 discloses apparatus for cooling of beverages. This is achieved by surrounding a beverage container with a coil of tubing which is used for the circulation of a refrigerant. The coil is affixed firmly to the container by its extreme ends and is held in tension.

Of course water heating systems utilising solar energy arc known, and one such system is described in United States Patent 4,282,861 Roark. However, this system uses the water to be heated as the heat transfer medium and such a system does not have the required efficiency to function adequately as a domestic or industrial water heating system.

The patent literature also contains numerous examples of heat exchange systems in which pipes are attached to tanks, such as United Kingdom Patent 377398 Bishop et al and German Patent Application No. P3325137 Knabben et al, but these disclosures are not directed towards heat pump systems in which the heat transfer fluid is a refrigerant or the like. For example, the Bishop et al patent pipes steam around a cooking pan and as such is impractical for application to a domestic water heater. In the case of Knabben, the invention is concerned with the shaping of the tube to maximize contact between the tube and the heat exchange tank, and the heat exchange medium is not even discussed. Thus, while patents such as the above disclose the attachment of heat exchange tubing to the lower portion of a liquid containing tank, the earlier mentioned patents directed to systems using refrigerant as the heat transfer medium would suggest that such a limited use of exchange tubing would not be satisfactory for a system using a heat pump.

It is an object of the present invention to provide a heat exchange system which does not suffer from the above disadvantage and which nevertheless provides efficient transfer of heat contained in a heating medium to water contained in a tank.

The invention therefore provides a water heater comprising a water tank having a wall formed from material having heat transfer properties, a cold water inlet adjacent one end of the tank, a hot water outlet adjacent the other end of the tank, a tube adapted to carry a refrigerant fluid and secured externally about said tank wall, heat conductive bonding material substantially coextensive with the length of said tube disposed directly between said tube and said tank wall and securing said tube and said tank wall substantially continuously one to the other with the tube and heat conductive bonding material in heat conductive relation with said tank wall through its external surface to transfer heat from condensation of refrigerant fluid in said tube through said wall to the water contained in the tank, said tube extending from a position adjacent said one end of the tank to a position not exceeding about 75% of the length of said wall of said tank, an evaporator positioned to be exposed to ambient conditions for absorbing heat energy from said ambient conditions and having a passage for carrying the refrigerant fluid whereby such fluid may be heated by said ambient conditions and a compressor connected to said passage and to said tube to circulate refrigerant fluid through said tube and to said evaporator, characterised in that said tube is applied under tension when it is secured to said tank to reduce the likelihood of the heat conductive bonding material breaking during expansion and contraction of the tube and tank during use.

In considering alternatives to the finned tube arrangement described above, conductive bonding of the refrigerant carrying tube to the external surface of the water tank was initially discarded as being likely, on theoretical considerations, to be too ineffective to warrant further consideration. However, after all other alternatives failed to produce acceptable results and a system of this type above was tested, it was surprisingly discovered that the heat transfer achieved by this system was in fact more effective than the heat transfer achieved by the finned tube system. Moreover, it was further determined that the tube should be attached to extend from a portion adjacent the bottom or coldest region of the water tank to a position not exceeding about 75% of the height of the tank since the attachment of the tube above a certain height was found to not materially improve the heat transfer properties of the heat exchange system under operating conditions on which the top portion of the water is likely to be hot. This of course resulted in a saving in material costs.

In a preferred embodiment of the invention, the tank is a vertically standing cylindrical tank and the tube extends from a position adjacent the bottom of the tank to a position approximately 50% to 70% of the height of the tank. It will be appreciated that although this arrangement is presently preferred, other arrangements in which the tube extends to a position from 50% to 75% of the height of the tank may be satisfactory. Similarly, while the use of a vertically standing cylindrical tank is presently preferred, the invention is equally applicable to a horizontally disposed tank of cylindrical or other suitable shape with the turns of said tube attached to the lower or downwardly inclined surface of the tank.

The turns in the tube conductively contacting the wall of the tank are preferably spaced by a distance which optimizes the heat transfer between the heat transfer medium and the water to be heated and at least one turn of the tube is preferably located under the cold water inlet.

The tube may be attached to the external surface of the wall of the tank by means of a heat transferring bonding material such as solder. Alternatively, the tube may be flattened and mechanically held in contact with the wall of the tank although the use of a heat transferring bonding material is preferred to ensure proper heat transfer.

The water tank wall is preferably of cylindrical metallic (e.g. steel) construction having a concave bottom wall and a convex top wall and the tube is preferably made of the same material to reduce the likelihood of heat transferring contact being lost due to the different coefficients of expansion of the tank and tube.

One presently preferred embodiment of the invention is shown in the accompanying drawings in which:
Figure 1 is a fragmentary sectional elevation of a water tank incorporating a heat exchanger suitable for use with the water heater embodying the invention;
Figure 1A is an enlarged fragmentary sectional elevation of portion of the tank showing the attachment of the tube thereto;
Figure 2A is a schematic elevation of mechanism for applying the tube to the tank;
Figure 2B is an enlarged schematic elevation of the tube deforming rollers shown in Figure 2A;
Figure 3 is a schematic diagram showing the layout of a solar boosted heat pump water heating system embodying the invention;
Figure 4 is a schematic diagram showing an arrangement for cooling the compressor used in the system of Figure 3;
Figure 5 is a schematic diagram showing one layout of the refrigerant passages in the solar collector used in the system of Figure 3; and
Figure 6 is a sectional side elevation of one of the solar evaporator/collectors used in the system of Figure 3.

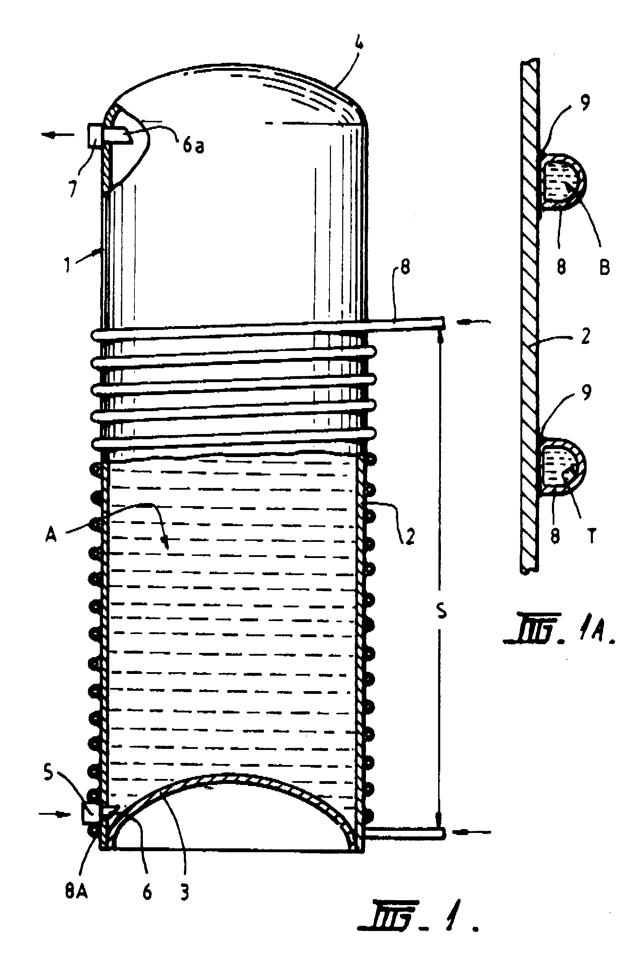

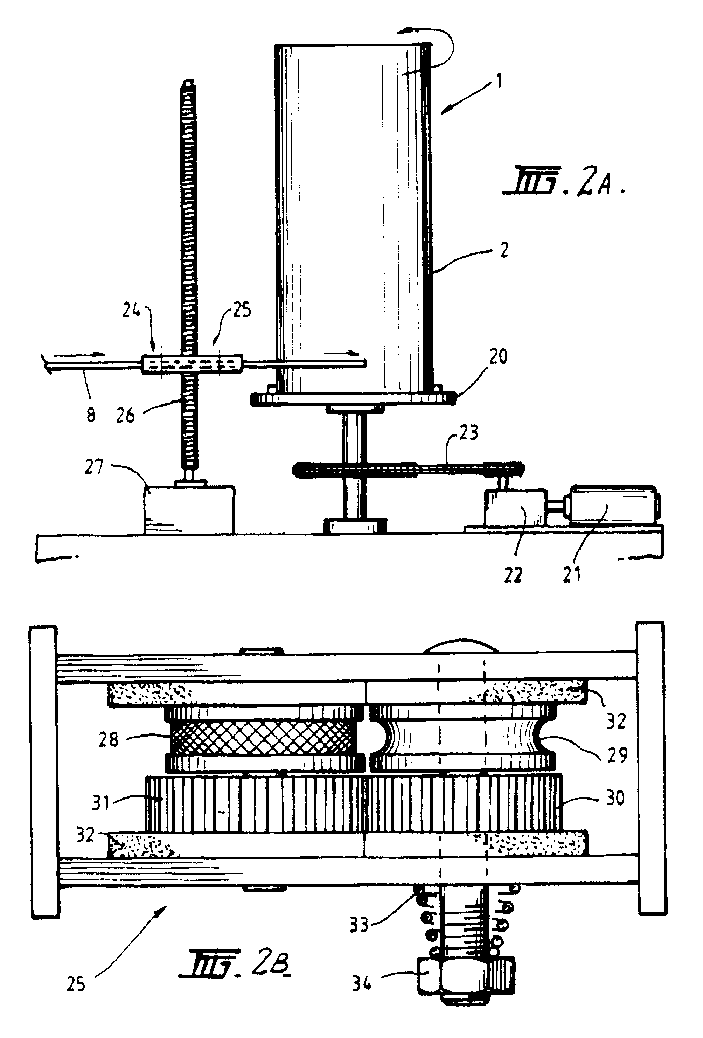

Referring to the drawings, the heat exchange system will be seen to comprise a water tank 1 having a cylindrical wall 2, a bottom wall 3, a convex top wall 4, a cold water inlet 5 adjacent the bottom wall 3 incorporating a diffuser or diverter 6 and a hot water outlet 7 adjacent the top wall 4. While the bottom wall 3 is shown to be concave, it may be convex if desired. A tube 8 carrying a refrigerant, such as refrigerant R12, is wrapped around the external surface of the tank wall 2. The tube 8 is preferably flattened as shown in figure 1A, so that it is D-shaped in cross-section, and the flattened portion is heat conductively bonded to the surface of the wall 2 by means of a thin film of solder 9 or the like between the outer surface of the wall 2 of the tank 1 and the flat face of the tube 8. To ensure the best possible contact during soldering and during expansion and contraction of the tube and tank wall 2 in use, the tube 8 is wound around the tank 1 under an applied tension of the order of 1,286 N, and is secured to the tank 1 while under tension. This may be achieved in the manner shown schematically in figure 2A of the drawings.

As shown in figure 2A, the tank 1 is supported on a rotating table 20, which is rotatably driven by a motor 21 through a gear box 22 and chain drive 23. A suitable length of tube 8 is fed by feed rollers 24 and deformed into the D-shape shown in figure 1A by deforming rollers 25. The feed rollers 24 and the deforming rollers 25 form part of an assembly including a nut engaging a feed screw 26 which is rotatably driven by a motor 27 to move the assembly up the tank 1 at the required rate relative to rotation of the table 20 so that the tube 8 is wound around the tank with the required spacing between adjacent turns.

As shown in greater detail in figure 2B, the deforming rollers 25 include a knurled roller 28 and a grooved support roller 29. The rollers 28 and 29 are driven by gears 30,31 which are driven at the same speed as the pinch rollers 24 to ensure that the tube 8 is fed and deformed at the same rate. The pinch rollers 24 and the rollers 28 and 29 are restrained against free rotation by means of brake pads, such as those shown in figure 2B at 32. The tension applied to the tube may be adjusted by clamping the brake pads 32 into engagement with the roller 29 and gear 30 under the influence of a spring 33 which is adjustably compressed by means of a tension nut 34.

In the present embodiment, the part of the tank 1 to which the tube 8 is to be fixed is cleaned and a copper flash is applied in a known manner. The tube 8 is then fixed by spot welding to the bottom of the tank wall 2 and the tube 8 is then wound around the tank using the mechanism shown in figure 2A of the drawings. A tin/lead solder paste is applied to the flat portion of the tube 8 as it is wound onto the tank 1 and once the tube has been completely wound, the upper end thereof is fixed to the wall 2 of the tank 1 by spot welding to maintain the tube 8 under tension. The tank 1 with an attached tube 8 is then heated in an oven to melt the solder and complete the formation of the heat transfer bond between the tube 8 and the wall 2 of the tank 1.

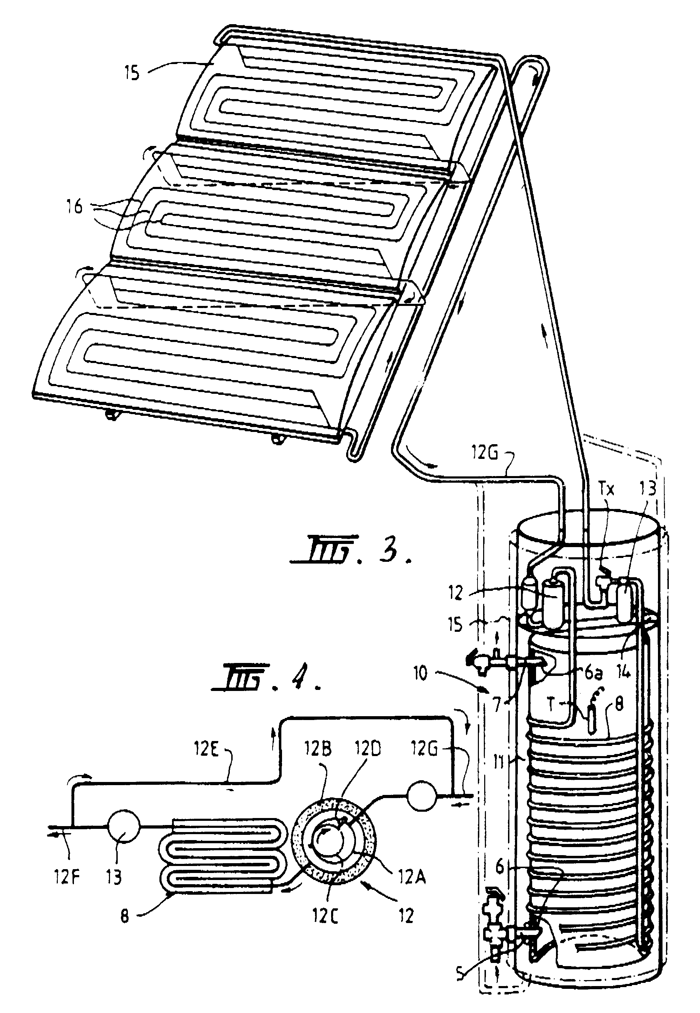

The tube 8 extends from the position adjacent the bottom wall 3 to a position approximately two thirds of the overall height of the tank 1 and defines a heat exchange surface S on the wall 2. The lowermost turn 8A of tube 8 is located under the cold water inlet 5, which is usually cold, and this causes sub-cooling of the refrigerant whereby it is rendered stable enough for transportation. The tube 8 is connected to a solar boosted heat pump (Figure 3 as described below) of the general type described in Australian patent number 509901, although it will be noted that modifications to that system have been made in the system described further below. Other forms of heat pump may also be used and the heat exchange medium carried by the tube 8 may be varied as desired.

It will be appreciated that by attaching the refrigerant carrying tube 8 to the external surface of the tank 1, a double-wall effect is automatically achieved and the protection required by the relevant water authorities, which stipulates a double walled tube where a refrigerant carrying tube is associated with water, is satisfied. Both the tube 8 and the tank 1 are preferably made from a similar material, or at least from materials having similar coefficients of thermal expansion.

In the present case, the tube 8 and the tank 1 are fabricated from steel or stainless steel. For example, the tube may be Bundyweld steel tubing while the tank 1 may be made from mild steel. As mentioned above, the thermal bond between the tube 8 and the tank 1 is maintained by the winding of the tube 8 around the tank 1 under tension. Where materials having slightly different coefficients of thermal expansion are used, the different rates of expansion and contraction of the materials may be compensated for by increasing the winding tension of the tube 8 in the manner described above. In any event, the winding of the tube under tension ensures that the thermal bond is maintained notwithstanding the flexing of the materials caused by expansion and contraction in use.

Furthermore, the described heat exchange arrangement is eminently suitable for use with a fluid A, such as water which is likely to contain precipitatable contaminants since a major portion of the heat exchanger surface S is vertical whereby the accumulation of precipitates on the heat exchanger surface is discouraged. Still further, the heat exchanger surface S is sufficiently enlarged to allow for the application of coatings, such as vitreous enamel, while still maintaining the product of heat transfer coefficient and surface area at an efficient level and minimizing the temperature difference between the fluid to be heated A and the heat exchanger surface S.

The area of the heat exchange surface S is selected so as to give the best compromise between the following conflicting requirements.
(a) The requirement that the heat exchanger surface be substantially vertical, downwardly facing or downwardly sloping as discussed above;
(b) The requirement that the heat flux density within the fluid A to be heated should be low enough to prevent destabilization of unstable components within the fluid whereby the maximum temperature difference between the heat exchanger surface S and the fluid A is limited so that fluids in contact with the surface are not locally heated to a point where the fluid A reaches some critical destabilization temperature, and
(c) The requirement that the heat exchanger surface S should be as compact as possible to that it is in the coldest region of the vessel.

Requirement (c) minimizes the irreversibility of the system of which the heat exchanger is a part which implies that the temperature at which heat is being transferred between the refrigerant B and the fluid A to be heated is as close as possible to the coldest sink temperature of fluid A. By making the heat exchanger compact the passive volume of the vessel is increased. This volume acts as a stored volume of fluid ready for delivery to the end user of the fluid A.

To enable the heat exchanger to be both compact and efficient, the spacing between the turns of tubing 8 and the flow rate of the refrigerant or other heat transfer fluid B must be optimized so as to give adequate fluid side surface area S, heat transfer medium side surface area T, heat transfer coefficients, heat exchanger fin efficiency and adequate passive storage if required. The requirements of this optimization is always a compromise and depends largely on the size of the system and the fluids in use. For the system shown in the preferred embodiment, having a vessel height of the order of 1520 mm, a surface height S of 1000 mm, and a turn spacing of 55 mm has been selected.

In general terms the design procedure for the above preferred embodiment can be summarized as follows:

Considering the passive storage volume requirement and the stratification of fluid A, the surface area S is made as compact as possible until the benefits outlined above are negated by the increase in heat transfer temperature difference across surface S caused by the reduction in area available to transmit the desired total heat flux.

The spacing and sizing of the tubes on the outside face of the heat exchanger surface S is then determined by established engineering design procedures involving consideration of internal tube heat transfer, tube to wall bond conduction and fin efficiency.

Reconsideration of the surface area S determined may then be necessary if the tube spacing computations reveal that further optimisation of the design is possible through some compromise with surface area S.

To avoid degradation of the stored volume of the fluid through mixing with fluid which has yet to be fully heated or cooled, stratification of fluids which are at different temperatures should be promoted as far as possible. To this end the entry and exit conduits are arranged so as not to promote mixing by stirring up the fluid A. Also the cold conduit 5 is positioned at the bottom of the tank and the hot conduit 7 at the top of the tank. To achieve a reduction in stirring, it will be noted that the axis of the entry conduit 5 is perpendicular to the axis of stratification. In addition a downwardly facing diffuser-deflector 6 is used at the cold water inlet 5 while an upwardly facing diffuser-deflector 6a is used at the hot water outlet 7 to further reduce mixing and stirring.

The heat exchanger should preferably be arranged so that the counter-flow principle is embodied as this further improves heat transfer. In the embodiment shown, it will be noted that the refrigerant B flows from the top of the coiled tube 8 to the bottom.

A preferred solar boosted heat pump water heating system is shown schematically in Figure 3 of the drawings and will be seen to include a heat exchange system embodying the invention in which the tank 1 and refrigerant carrying tube 8 is enclosed in a housing 10 containing insulating foam 11. For convenience, the compressor 12 and receiver/filter/drier 13 of the heat pump system are mounted on a refrigeration chassis 14 located on top of the tank housing 10. This arrangement avoids the need for the housing 10 to be supported at an elevated position to allow location of the compressor and receiver under the tank housing as is usual, thereby reducing construction costs.

The compressor 12 is preferably a rotary compressor, although other forms of refrigerant compressors may be used without materially detracting from the efficiency of the system. A rotary compressor is preferred because of its relatively smooth quieter operation. Furthermore, a rotary compressor is able to accept slugs of liquid on the suction side of the compressor whereas other tubes of compressors have greater difficulty accepting such slugs. These slugs may occur in a solar boosted heat pump due to the rapid variations in temperature which may be experienced as a result of changing weather conditions.

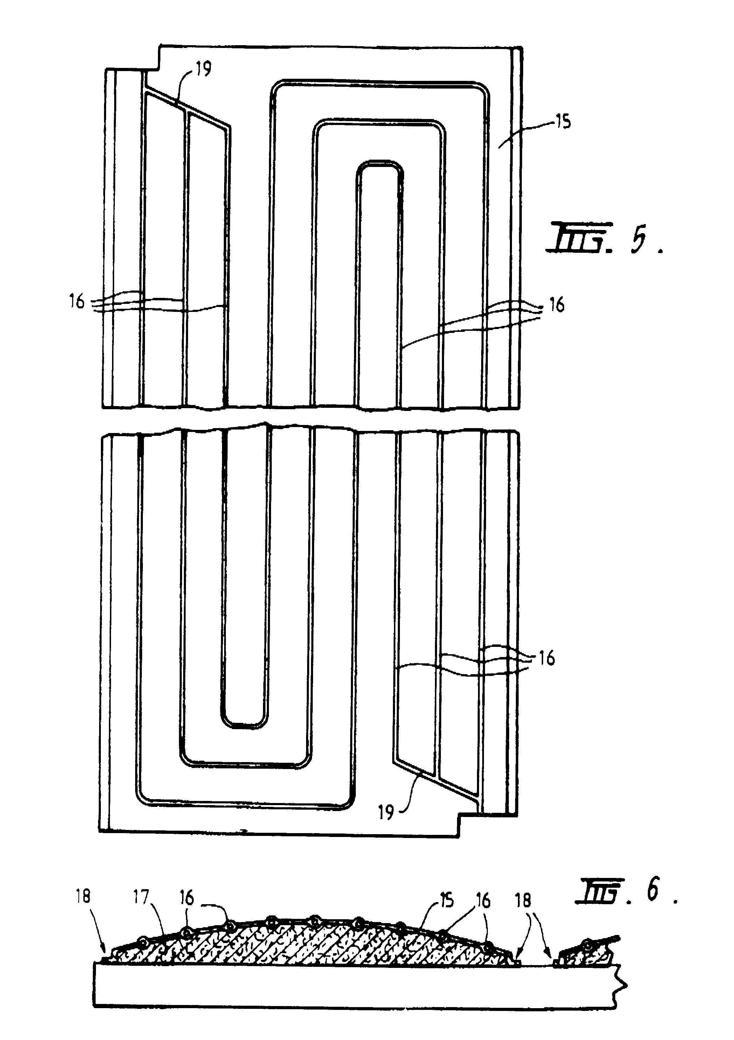

To reduce heat losses from the system to a minimum, the compressor 12 is preferably externally insulated. To compensate for the heat build up caused by such external insulation, the compressor is cooled by bleeding refrigerant from the outlet of the condenser or receiver directly into the inlet suction line or into the "suction side" of the cylinder through a bypass line which is preferably controlled by a control valve, capilliary tubing or fixed orifice (not shown). One arrangement for achieving this is shown schematically in Figure 4 of the drawings and will be seen to compromise a cylinder 12A enclosed within an insulating casing 12B and containing a rolling piston 12C and vane 12D. A liquid injection tube 12E is connected from the refrigerant liquid line to the suction line 12G into the compressor 12. By this arrangement, heat which would normally have been wasted to the air is passed to the water in the tank through the condenser. It has been found that the arrangement shown in Figure 4 works more reliably than injection directly into the cylinder as used in commercially available compressors.

The system includes a thermostat control system including a thermostat T,

More complex thermostat variations are possible, including:
a) a variable or dual thermostat setting which depends on the level of sunlight, or
b) sensing evaporation temperature when the unit is running and using this as an indication of the potential performance which in turn increases or decreases the thermostat set point.

The overall aim of the above described systems is to bias the system towards running during the day by making it raise the water to a higher temperature during daylight hours then during the night. Further sophistications are possible by making the set point of the thermostat a function of solar radiation and ambient air temperature although control "intelligence" is required in this case so that adequate water temperatures are reached during the winter. Similarly, biassing the system to operate primarily during a low tariff (off-peak) period is possible.

The compressor 12 and the receiver 13 are connected to a series of solar evaporator plates 15 which are located in a position exposed to the sun. Each evaporator plate contains a number of refrigerant passages 16 which are preferably arranged in the configuration shown in Figure 5 of the drawings. Each evaporator plate 15 is made from two sheets of metal which are bonded together, except in the regions of the passages 16, by the so-called Roll-Bond (Trade Mark) process, which is well-known in the art. Since the evaporator plates are formed from thin sheet metal, each evaporator plate is supported in an outwardly curved profile as shown in the sectional elevation of Figure 6 of the drawings. The outwardly curved profile is maintained by the positioning of a molded insulating foam former 17 behind each plate 15, the assembly being supported by two bearers as shown in Figures 3 and 6 of the drawings. Each evaporator plate 15 is further strengthened by the formation of an angle section 18 along each longitudinal edge of the plate 15. The evaporator plate arrangement described above has been found to perform well in wind tests conducted to assess its ability to withstand wind forces of the type encountered when the evaporator plate is mounted on the roof of a dwelling.

As will be appreciated from Figure 5 of the drawings, each evaporator plate is formed with three separate parallel refrigerant passages 16 connected to either end by a manifold 19 to which the refrigerant lines (not shown) are connected. The plates 15 are, as shown in Figure 3 of the drawings, connected in series so that the outlet manifold of the first plate is connected to the inlet manifold of the second plate and so on. As will be further seen from Figure 5 of the drawings, the first passage connected to a manifold at one end of the plate is the last passage connected to the manifold at the other end of the plate to assist in equalising the flow of refrigerant in the parallel passage 16. The cross sectional area of the manifold is reduced after each junction to further assist in flow equalisation. The arrangement minimises the cross sectional area of the manifold and its junctions for a given design pressure drop across the manifold. This results in an improved burst pressure for a given refrigerant pressure drop compared with the performance of the typical "waffle" type distributor used in other "Roll Bond" evaporators.

As a result of these features the evaporator plate can be used with high evaporation pressure refrigerants such as R22 without incurring a high pressure drop across the evaporator. Furthermore the evaporator may be mounted at downward sloping angles, as is usually desired, as flow equalisation between passages 16 is relatively unaffected by the forces of gravity which usually cause the lower-most passage to be favoured. Refrigerant fluid is delivered to the top of each plate 15 rather than to the bottom, as is usually the case, and this allows the use of less refrigerant since the plates do not need to be flooded as is the case with bottom entry. An additional advantage is that positive oil return is achieved since the oil does not tend to accumulate at the bottom of the plates as it does with bottom entry. Top entry of the refrigerant in combination with high velocity refrigerant circulation causes annular flow of wet fluid in the passages 16 which improves the heat transfer from the plates to the fluid. In this mode of operation refrigerant gas flows within the wet fluid annulus.

A liquid trap is provided prior to returning the refrigerant to the compressor suction to prevent any accumulation of liquid in the plates 15 while the system is off from flowing by gravity down into the compressor suction. The trap must be sized such that oil is carried over with the refrigerant gas during operation.

It will be noted from figure 3 of the drawings that the TX valve in the liquid line is located inside the refrigeration chassis 14 rather than at the evaporator plates 15 as is usually the case. Although compensation must be allowed for the location of the TX valve in this position, it has been found that valve performs in a superior manner in this location and manufacture of the system is simplified by the location of the valve in this position. The TX valve is preferably internally equalised and biased to give an appropriate superheat by setting to a negative superheat setting.

While the evaporator plates are shown in the above embodiment as being mounted in a position exposed to the sun, the plates may be mounted on the outside of the housing 10, as shown in broken outline in Figure 3, in a wrap around configuration in areas where the ambient temperature is high or where the tank is able to be mounted on a roof or in another position which is at least partly exposed to the sun. In such a situation, the heat pump operates at least partly as an air source heat pump.

In tests conducted by the Solar Energy laboratory of the University of New South Wales, the performance of a solar boosted heat pump water heater having a heater arrangement according to the above described preferred embodiment was compared with a solar boosted heat pump water heater having a finned heated exchanger arrangement of the type described above and it was found that the average coefficient of performance of the water heater incorporating the heat exchanger embodying the present invention was approximately 11.2% better than that of the prior art arrangement for virtually identical test conditions. The test result may be summarised as follows:
Old Style Unit (Inserted finned tube condenser)
Test Period: 3-31 May 1985 (29 days)
Average Ambient Temperature: 15.8°C
Average Solar Irradiation: 12.7 MJ/m²/day
Average Overall System Coefficient of Performance: 2.48
New Style Unit (condenser coil wrapped around cylinder)
Test Period: 3-31 July 1985 (29 days)
Average Ambient Temperature: 12.4°C
Average Solar Irradiation: 13.7 MJ/m²/day
Average Overall System Coefficient of Performance: 2.76
Both periods provided virtually identical test conditions for solar heat pump operation. In July slightly lower average ambient temperature combined with slightly higher average solar irradiation to balance out and produce almost the same climatic conditions.

The COP achieved in July was however approximately an 11.2% improvement on the May figure.

In both cases the average water discharge temperature on the same load pattern approximated 57°C.

## Claims

1. A water heater comprising:
a water tank (1) having a tank wall (2) formed from material having heat transfer properties;
a cold water inlet (5) adjacent one end of the tank (1);
a hot water outlet (7) adjacent the other end of the tank (1);
a tube (8) adapted to carry a refrigerant fluid and secured externally about said tank wall (2);
heat-conductive bonding material (9) substantially coextensive with the length of said tube (8) disposed directly between said tube (8) and said tank wall (2) and securing said tube (8) and said tank wall (2) substantially continuously one to the other, with the tube (8) and heat-conductive bonding material (9) in heat-conductive relation with said tank wall (2) through its external surface to transfer heat from condensation of refrigerant fluid in said tube (8) through said tank wall (2) to the water contained in the tank (1);
said tube (8) extending from a position adjacent said one end of the tank (1) to a position not exceeding about 75% of the length of said tank wall (2) of said tank (1);
an evaporator positioned to be exposed to ambient conditions for absorbing heat energy from said ambient conditions and having a passage (16) for carrying the refrigerant fluid whereby such fluid may be heated by said ambient conditions; and
a compressor (12) connected to said passage (16) and to said tube (8) to circulate refrigerant fluid through said tube (8) and to said evaporator; characterised in that said tube (8) is under applied tension when it is secured to said tank (1) to reduce the likelihood of the heat conductive bonding material (9) breaking during expansion and contraction of the tube (8) and tank (1) during use.

2. The water heater of Claim 1, wherein said tank wall (2) is metallic and said tube (8) is made from material having a substantially similar coefficient of thermal expansion as said tank wall (2).

3. The water heater of Claim 1, wherein said tank (1) is a vertically standing cylindrical tank and the tube (8) extends from a position adjacent the bottom of the tank (1) to a position approximately 50% to 70% of the height of the tank (1).

4. The water heater of Claim 3, wherein said tube (8) extends to a position approximately 66% of the height of the tank (1).

5. The water heater of Claim 4, wherein at least one turn of said tube (8) is located below said cold water inlet (5).

6. The water heater according to any preceding claim, wherein said evaporator comprises flat, heat-conductive, sheet material (15) forming a panel having a plurality of passages (16) through which the refrigerant fluid is circulated in a heat conductive relation with said panel means defining a manifold passage (19) at each of the opposite ends of said passages (16) and connecting one to the other, the passage (16) which is first connected to said manifold passage (19) at one end of said panel being last connected to said manifold passage (19) at the opposite end of said panel.

7. The water heater according to any one of Claims 1 to 5, wherein said evaporator comprises a solar collector panel having said passage (16) through which the refrigerant fluid is circulated in heat-conductive relationship with said panel, means defining an inlet to said collector for flowing the fluid into the collector passage (16) said panel being secured to a support which holds the panel in an outwardly bowed configuration to thereby increase the effective strength of the panel.

8. The water heater according to Claim 6 or 7, wherein said collector is disposed with one end elevated with respect to the other end, said refrigerant fluid inlet to the collector being positioned at said elevated end, said panel being formed of heat-conductive, sheet material.

9. The water heater according to any preceding claim including an insulating casing surrounding said tank, said compressor being positioned on top of said casing, and means for externally insulating said compressor.

10. A method of making a heat exchanger for a water heater comprising the steps of winding a tube (8) around the external surface of a tank (1) and fastening said tube (8) to said tank (1), characterised in that one end of the tube (8) is attached to the external surface of the tank (1), the tube (8) is wound around the tank (1) while applying a predetermined tension to the tube (8), the other end of the tube (8) is attached to the tank (1) to keep the tube (8) in tension and the fastening of the tube (8) to the tank (1) is achieved by conductively bonding the tube (8) to the tank (1).

11. The method of Claim 10, further comprising the step of forming a flat area on said tube (8) prior to said winding step and winding the tube (8) around said tank (1) with said flattened area in contact with said tank (1).

12. The method of Claim 10 or 11, further comprising applying a heat conductive bonding material (9) to that part of said tube (8) which will be in contact with the tank (1) when wound around the tank (1) prior to contact with said tank (1), and heating the material to form a thin bonding film between said tube (1) and said tank (1).

13. The method according to claims 10 to 12, wherein the tension applied to said tube (8) is about 1286-N.

## Patentansprüche

1. Wassererhitzer, mit:
einem Wasserbehälter (1) mit einer Behälterwand (2), gebildet aus Material mit Wärmeübertragungseigenschaften;
einem Kaltwassereinlaß (5) in der Nähe eines Endes des Behälters (1);
einem Heißwasserauslaß (7) in der Nähe des anderen Endes des Behälters (1);
einem Rohr (8), dazu ausgelegt, ein Kältemittelfluid zu führen und außen an der Behälterwand (2) befestigt;
wärmeleitendem Verbindungsmaterial (9) im wesentlichen mit gleicher Längenausdehnung wie die Läng des Rohres (8), direkt zwischen das Rohr (8) und die Behälterwand (2) gelegt und das Rohr (8) und die Behälterwand (2) in wesentlichen kontinuierlich aneinander befestigend, wobei das Rohr (8) und das wärmeleitende Verbindungsmaterial (9) in wärmeleitender Beziehung mit der Behälterwand (2) über ihre Außenfläche stehen, um Wärme aus der Kondensation von Kältemittelfluid in dem Rohr (8) durch die Behälterwand (2) auf das in dem Behälter (1) enthaltene Wasser zu übertragen;
wobei sich das Rohr (8) von einer Stelle in der Nähe eines Endes des Behälters (1) zu einer Stelle, die etwa 75% der Länge der Behälterwand (2) des Behälters (1) nicht überschreitet, erstreckt;
einem Verdampfer, der so angeordnet ist, daß er Umweltbedingungen ausgesetzt ist, um Wärmeenergie aus den Umweltbedingungen zu absorbieren, und mit einem Durchgang (16) zum Führen des Kältemittelfluides, wodurch ein derartiges Fluid durch die Umweltbedingungen erhitzt werden kann; und
einem Kompressor (12), der mit dem Durchgang (16) und mit dem Rohr (8) verbunden ist, um Kältemittelfluid durch das Rohr (8) und zu dem Verdampfer umzuwälzen;
dadurch gekennzeichnet, daß das Rohr (8) unter aufgebrachter Spannung ist, wenn es an dem Behälter (1) befestigt wird, um die Wahrscheinlichkeit zu reduzieren, daß das wärmeleitende Verbindungsmaterial (9) während des Ausdehnens und des Zusammenziehens des Rohres (8) und des Behälters (1) während der Verwendung bricht.

2. Wassererhitzer nach Anspruch 2, bei dem die Behälterwand (2) metallisch ist und das Rohr (8) aus Material mit einem im wesentlichen ähnlichen Wärmeausdehnungkoeffizienten wie dem der Behälterwand (2) hergestellt ist.

3. Wassererhitzer nach Anspruch 1, bei dem der Behälter (1) ein senkrecht stehender zylindrischer Behälter ist und das Rohr (8) sich von einer Stelle in der Nähe des Bodens des Behälters (1) zu einer Stelle etwa in 50% bis 70% der Höhe des Behälters (1) erstreckt.

4. Wassererhitzer nach Anspruch 3, bei dem das Rohr (8) sich zu einer Stelle in etwa 66% der Höhe des Behälters (1) erstreckt.

5. Wassererhitzer nach Anspruch 4, bei dem wenigstens eine Windung des Rohres (8) unterhalb des Kaltwassereinlasses (5) angeordnet ist.

6. Wassererhitzer nach einem der vorangehenden Ansprüche, bei dem der Verdampfer ebenes wärmeleitendes Blattmaterial (15) aufweist, das eine Tafel mit einer Vielzahl von Durchgängen (16) bildet, durch welche das Kältemittelfluid in einer wärmeleitenden Beziehung mit der Tafeleinrichtung umgewälzt wird, welche einen Verzweigungsdurchgang (19) an jedem der gegenüberliegenden Enden der Durchgänge (16) definiert und miteinander den Durchgang (16), der als erster an dem Verzweigungsdurchgang (19) an einem Ende der Tafel angeschlossen ist, mit einem Ende der Tafel, das zuletzt an dem Verzweigungsdurchgang (19) am gegenüberliegenden Ende der Tafel angeschlossen ist, verbindet.

7. Wassererhitzer nach einem der Ansprüche 1 bis 5, bei dem der Verdampfer eine Sonnenkollektortafel mit dem Durchgang (16) aufweist, durch den das Kältemittelfluid in wärmeleitender Beziehung mit der Tafel umgewälzt wird, eine Einrichtung, die einen Einlaß zu dem Kollektor zum Einbringen des Fluides in den Kollektordurchgang (16) definiert, wobei die Tafel an einem Träger befestigt ist, der die Tafel in einer nach außen gebogenen Konfiguration hält, um so die effektive Festigkeit der Tafel zu erhöhen.

8. Wassererhitzer nach Anspruch 6 oder 7, bei dem der Kollektor mit einem Ende in bezug auf das andere Ende erhöht angeordnet ist, wobei der Kältemittelfluideinlaß in den Kollektor an dem erhöhten Ende angeordnet ist, wobei die Tafel aus wärmeleitendem Blattmaterial gebildet ist.

9. Wassererhitzer nach einem der vorangehenden Ansprüche, einschließlich eines isolierenden Gehäuses, das den Behälter umgibt, wobei der Kompressor auf dem Gehäuse angeordnet ist, und einer Einrichtung zum äußeren Isolieren des Kompressors.

10. Verfahren zum Herstellen eines Wärmeaustauschers für einen Wassererhitzer, mit den Schritten des Windens eines Rohres (8) um die Außenfläche eines Behälters (1) und des Befestigens des Rohres (8) an dem Behälter (1), dadurch gekennzeichnet, daß ein Ende des Rohres (8) an der Außenfläche des Behälters (1) befestigt wird, das Rohr (8) um den Behälter (1) gewunden wird, während eine vorbestimmte Spannung auf das Rohr (8) aufgegeben wird, das andere Ende des Rohres (8) an dem Behälter (1) befestigt wird, um das Rohr (8) unter Spannung zu halten, und das Befestigen des Rohres (8) an dem Behälter (1) erreicht wird, indem das Rohr (8) leitend mit dem Behälter (1) verbunden wird.

11. Verfahren nach Anspruch 10, das weiterhin den Schritt des Bildens einer ebenen Fläche auf dem Rohr (8) vor dem Windungsschritt und des Windens des Rohres (8) um den Behälter (1), wobei die geebnete Fläche in Kontakt mit dem Behälter (1) ist, aufweist.

12. Verfahren nach Anspruch 10 oder 11, das weiterhin das Aufbringen eines wärmeleitenden Verbindungsmaterials (9) auf den Teil des Rohres (8), der mit dem Behälter (1) in Kontakt sein wird, wenn er um den Behälter (1) gewunden wird, vor dem Kontakt mit dem Behälter (1) und das Erhitzen des Materials, um einen dünnen Verbindungsfilm zwischen dem Rohr (8) und dem Behälter (1) zu bilden, umfaßt.

13. Verfahren nach Anspruch 10 bis 12, bei dem die auf das Rohr (8) aufgebrachte Spannung etwa 1286-N beträgt.

## Revendications

1. Chauffe-eau comprenant :
un réservoir d'eau (1) pourvu d'une paroi (2) de réservoir en une matière possédant des propriétés de transfert de chaleur;
une entrée (5) d'eau froide près d'une extrémité du réservoir (1);
une sortie (7) d'eau chaude près de l'autre extrémité du réservoir (1);
un tube (8) apte à transporter un fluide réfrigérant et fixé à l'extérieur autour de ladite paroi (2) de réservoir;
un matériau de liaison conducteur de la chaleur (9) de même étendue que la longueur dudit tube (8), disposé directement entre ledit tube (8) et ladite paroi (2) de réservoir et fixant l'un à l'autre ledit tube (8) et ladite paroi (2) du réservoir d'une manière essentiellement continue, le tube (8) et le matériau de liaison conducteur de la chaleur (9) étant en relation de conduction de chaleur avec ladite paroi (2) de réservoir par la surface externe de celle-ci afin de transférer de la chaleur provenant de la condensation du fluide réfrigérant contenu dans ledit tube (8), à travers ladite paroi (2) de réservoir, à l'eau contenue dans le réservoir (1);
ledit tube (8) s'étendant depuis une position adjacente à ladite première extrémité du réservoir (1) jusqu'à une position ne dépassant pas environ 75% de la longueur de ladite paroi (2) de réservoir dudit réservoir (1);
un évaporateur positionné de manière à être exposé aux conditions ambiantes pour absorber de l'énergie thermique provenant desdites conditions ambiantes, et pourvu d'un passage (16) pour le transport du fluide réfrigérant, grâce à quoi ledit fluide peut être chauffé par lesdites conditions ambiantes;
un compresseur (12) relié audit passage (16) et audit tube (8) pour mettre en circulation un fluide réfrigérant à travers ledit tube (8) et vers ledit évaporateur; caractérisé en ce que ledit tube (8) est sous une tension appliquée lorsqu'il est fixé audit réservoir (1) afin de réduire, en utilisation, pendant la dilatation et la contraction du tube (8) et du réservoir (1), la probabilité d'une rupture du matériau de liaison conducteur de la chaleur (9).

2. Chauffe-eau selon la revendication 1, dans lequel ladite paroi (2) de réservoir est métallique, et ledit tube (8) est en une matière dont le coefficient de dilatation thermique est essentiellement semblable à celui de ladite paroi (2) de réservoir.

3. Chauffe-eau selon la revendication 1, dans lequel ledit réservoir (1) est un réservoir cylindrique dressé verticalement, et le tube (2) s'étend depuis une position adjacente au fond du réservoir (1) jusqu'à une position située approximativement à 50% à 70% de la hauteur du réservoir (1).

4. Chauffe-eau selon la revendication 3, dans lequel ledit tube (8) s'étend jusqu'à une position située approximativement à 66% de la hauteur du réservoir (1).

5. Chauffe-eau selon la revendication 4, dans lequel au moins un tour dudit tube (8) est situé au-dessous de ladite entrée (5) d'eau froide.

6. Chauffe-eau selon l'une quelconque des revendications précédentes, dans lequel ledit évaporateur comprend un matériau plat foliiforme (15), conducteur de la chaleur formant un panneau dans lequel sont ménagés une série de passages (16) à travers lesquels le fluide réfrigérant est mis en circulation dans une relation de conduction de chaleur, ledit panneau définissant un passage de distribution (19) à chacune des extrémités opposées desdits passages (16) et les reliant l'un à l'autre, le passage (16) qui est le premier relié audit passage de distribution (19) à une extrémité dudit panneau étant le dernier relié audit passage de distribution (19) à l'extrémité opposée dudit panneau.

7. Chauffe-eau selon l'une quelconque des revendications 1 à 5, dans lequel ledit évaporateur comprend un panneau collecteur solaire dans lequel est ménagé ledit passage (16) à travers lequel le fluide réfrigérant est mis en circulation dans une relation de conduction de la chaleur avec ledit panneau, un moyen définissant une entrée audit collecteur pour faire passer le fluide vers le passage (16) de collecteur, ledit panneau étant fixé à un support qui tient le panneau dans une configuration incurvée vers l'extérieur afin d'augmenter ainsi la rigidité effective du panneau.

8. Chauffe-eau selon la revendication 6 ou 7, dans lequel ledit collecteur est disposé d'une manière telle qu'une extrémité est élevée par rapport à l'autre extrémité, ladite entrée de fluide réfrigérant au collecteur étant positionnée à ladite extrémité élevée, ledit panneau étant formé à partir d'un matériau foliiforme conducteur de la chaleur.

9. Chauffe-eau selon l'une quelconque des revendications précédentes, incluant un enveloppe isolante entourant ledit réservoir, ledit compresseur étant positionné au sommet de ladite enveloppe, et un moyen d'isolation externe dudit compresseur.

10. Procédé de fabrication d'un échangeur de chaleur pour un chauffe-eau, comprenant les étapes consistant à enrouler un tube (8) autour de la surface externe d'un réservoir (1) et fixer ledit tube (8) sur ledit réservoir (1), caractérisé en ce qu'une extrémité du tube (8) est attachée à la surface externe du réservoir (1), le tube (8) est enroulé autour du réservoir (1) tout en appliquant au tube (8) une tension prédéterminée, l'autre extrémité du tube (8) est attachée au réservoir (1) afin de maintenir le tube (8) sous tension, et la fixation du tube (8) sur le réservoir (1) est réalisée par une liaison conductrice de la chaleur entre le tube (8) et le réservoir (1).

11. Procédé selon la revendication 10, comprenant en outre l'étape consistant à former, avant ladite étape d'enroulement, une zone plate sur le tube (8), et à enrouler ledit tube (8) autour du réservoir (1), ladite zone aplatie étant en contact avec ledit réservoir (1).

12. Procédé selon la revendication 10 ou 11, comprenant en outre les étapes consistant à appliquer sur la partie dudit tube (8) qui sera en contact avec le réservoir (1) lorsqu'il sera enroulé autour du réservoir (1), avant le contact avec ledit réservoir (1), un matériau de liaison conducteur de la chaleur (9), et à chauffer ce matériau afin de former un mince film de liaison entre ledit tube (8) et ledit réservoir (1).

13. Procédé selon l'une des revendications 10 à 12, dans lequel la tension appliquée audit tube (8) est d'environ 1286N.
